# FASCICULE DE BREVET EUROPEEN

(11) **EP 0 406 796 B1**
(45) Date de publication et mention de la délivrance du brevet: **07.04.1993**
(21) Numéro de dépôt: 90112674.8
(22) Date de dépôt: 03.07.1990
(51) Int. Cl.: C03B 37/014

(54) **Procédé de fabrication en continu d'un barreau de verre, notamment pour la réalisation de matrices laser ou de préformes pour tirage de fibres optiques**
Verfahren zur kontinuierlichen Herstellung eines Glasstabes, insbesondere für die Herstellung von Lasermatrizen oder Vorformen für das Ziehen von optischen Fasern
Method for continuous production of a glass rod, in particular for producing laser matrices or preforms for drawing optical fibres

(30) Priorité: 06.07.1989 FR 8909123
(43) Date de publication de la demande: 09.01.1991
(73) Titulaire: ALCATEL FIBRES OPTIQUES, F-95871 Bezons Cedex (FR)
(72) Inventeur: Baniel, Pascal, F-91130 Ris Orangis (FR); Belouet, Christian, F-92330 Sceaux (FR)
(74) Mandataire: Weinmiller, Jürgen, Dipl.-Ing.

(56) Documents cités:
- FR-A- 2 410 291
- FR-A- 2 509 637
- PATENT ABSTRACTS OF JAPAN, vol. 7, no. 7 (C-144)[1152], 12 janvier 1983; & JP-A-57 166 328 (NIPPON DENSHIN DENWA KOSHA) 13-10-1982
- PATENT ABSTRACTS OF JAPAN, vol. 10, no. 90 (C-337)[2147], 8 avril 1986; & JP-A-60 221 332 (HITACHI DENSEN K.K.) 06-11-1985
- PATENT ABSTRACTS OF JAPAN, vol. 6, no. 197 (C-128)[1075], 6 octobre 1983; & JP-A-57 106 531 (NIPPON DENSHIN DENWA KOSHA) 02-07-1982

## Description

La présente invention concerne un procédé de fabrication d'un barreau de verre, par exemple cylindrique à section circulaire, destiné à des applications optiques et notamment à la réalisation d'une matrice laser ou d'une préforme utilisée pour obtenir une fibre optique.

L'invention concerne plus particulièrement la fabrication d'un cylindre en verre halogéné en particulier fluoré, en vue de la réalisation de fibres optiques à très faible taux d'atténuation (de l'ordre de 0,02 dB/km) utilisées dans les télécommunications optiques.

On sait que le traitement du verre fluoré est délicat et qu'en particulier, tout contact physique au cours de la fabrication du cylindre, entre le verre et les parois du récipient ou du moule qui le contient est à éviter dans la mesure du possible. Un contact produit en effet une introduction d'impuretés dans le verre ainsi que la formation de cristallites ou microcristaux et ces défauts viendraient ultérieurement nuire à la qualité de la fibre optique obtenue.

Le document Patent Abstracts of Japan, vol. 17, n° 7 (c-144) (1152) du 12 janvier 1983 correspondant au document JP-A-57166328, propose de réaliser un barreau en verre fluoré en faisant tomber de manière continue sur l'extrémité supérieure d'un support que l'on déplace verticalement vers le bas, une poudre de verre que l'on chauffe et que l'on fond. Ce procédé ne permet pas d'obtenir un tube cylindrique bien calibré.

Un premier but de l'invention est de réaliser un cylindre de verre exempt d'impuretés et de cristallites; pour cela, il est prévu d'adapter la technique connue dite du palier fluide, dans laquelle une couche de gaz est constamment interposée, au cours de l'élaboration du produit vitreux, entre le matériau et le récipient ou le moule qui le contient, assurant ainsi une complète absence de contact.

Un autre but de l'invention est de réaliser un cylindre parfaitement calibré, avec une précision de l'ordre de 1/500 ou plus sur le diamètre du cylindre, de manière à permettre d'atteindre, lors de la réalisation de fibres optiques, la précision souhaitée.

Un autre but de l'invention est de réaliser un cylindre de verre affiné, c'est-à-dire parfaitement exempt de microbulles, qui ne permettraient pas, par exemple dans l'application aux fibres optiques, d'atteindre les niveaux d'atténuation recherchés; pour éliminer les microbulles ou prévenir leur formation, il est nécessaire qu'au cours de la fabrication du cylindre, une zone du matériau utilisé soit portée à une température élevée, voisine de celle où le verre atteint une viscosité voisine de celle de l'eau; à cette température, les microbulles en formation s'échappent, de telle sorte qu'on peut obtenir un matériau exempt de défaut; il faut en outre que le matériau de cette zone soit constamment renouvelé pour que le barreau, une fois terminé, soit dans la totalité de son volume exempt de microbulles; il faut en outre que la zone portée à haute température ait un volume limité et que le matériau n'y séjourne pas trop longtemps, de manière à éviter le risque d'une décomposition importante des produits fluorés utilisés pour la fabrication du barreau.

Tous ces objectifs sont atteints par le procédé de l'invention énoncé ci-après.

L'invention à pour objet un procédé pour la réalisation d'un barreau de verre halogéné en particulier fluoré caractérisé en ce qu'il comprend les opérations suivantes:
- on distribue en continu une poudre constituée d'un mélange de produits halogénés sur un support déplaçable de manière continue verticalement de haut en bas, ledit support étant placé, au commencement de la mise en marche du procédé, à l'intérieur d'un conteneur ayant une cavité intérieure cylindrique de section supérieure de quelques dizaines de microns à celle du barreau à réaliser, ledit conteneur comprenant des moyens de chauffage pour assurer la fusion du matériau pulvérulent,
- on injecte en permanence, entre le barreau en formation et la paroi dudit conteneur, un gaz, de manière à réaliser une couche de gaz de quelques dizaines de microns d'épaisseur à une pression supérieure à celle qui environne le conteneur et ajustée en permanence de manière à éviter tout contact entre le matériau du barreau et ladite paroi intérieure du conteneur,
- on chauffe la partie supérieure du barreau en formation de manière à créer une zone dans laquelle la viscosité du matériau est de l'ordre de la poise, favorisant l'élimination des microbulles.

D'autres particularités du procédé de l'invention, ainsi que des modalités pour sa mise en oeuvre, apparaîtront dans la description donnée ci-après en référence au dessin annexé dans lequel:
- la figure 1 est une vue schématique d'un dispositif de mise en oeuvre du procédé de l'invention,
- la figure 2 est un diagramme montrant le profil de températures utilisé dans le procédé.

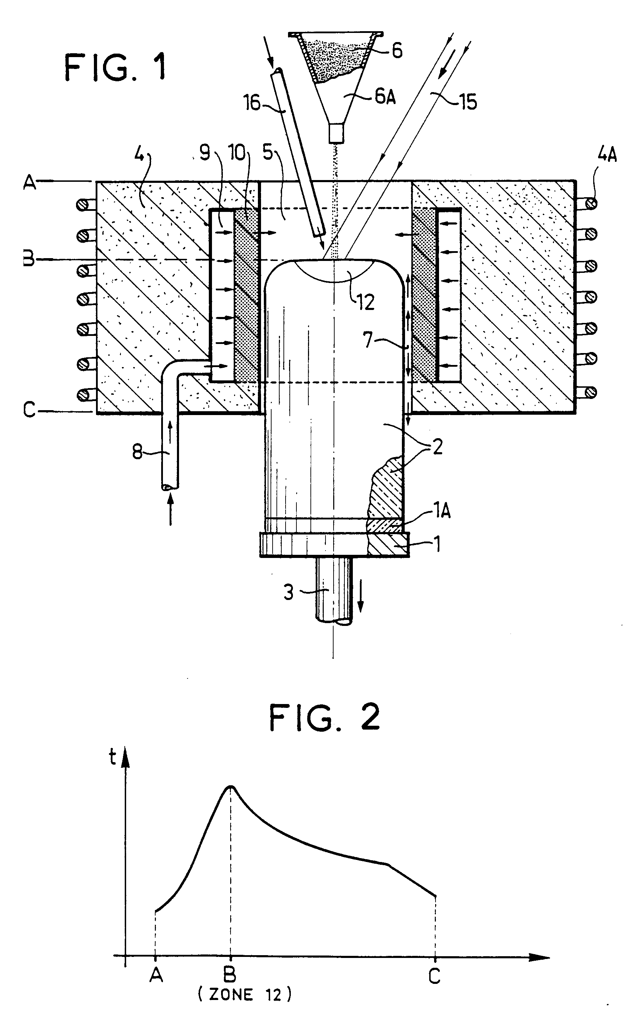

Dans la figure 1, on distingue un support 1 sur lequel repose le barreau 2 à réaliser; le support est placé à l'extrémité d'une tige 3 assujettie à effectuer un mouvement vertical de haut en bas comme l'indique la flèche; le mécanisme de déplacement de la tige n'est pas représenté, mais est à la portée de l'homme du métier.

A la mise en route du procédé, le plateau 1 est à l'intérieur d'un conteneur 4, présentant une cavité cylindrique 5 de diamètre égal à celui du barreau à obtenir augmenté de quelques dizaines de microns. Le conteneur est par exemple réalisé en graphite, matériau qu'il est possible d'obtenir avec un grand degré de pureté, en particulier exempt de métaux; ce matériau a par ailleurs la propriété d'être inerte vis-à-vis des composés fluorés. Le graphite pur présente donc l'avantage de ne pas polluer l'environnement du barreau en fabrication et de ne pas être dégradé malgré une ambiance très corrosive due à la présence de composés fluorés et de certains produits résultant de leur décomposition. Il est en outre facile à usiner avec une grande précision, condition nécessaire à l'obtention de la précision désirée pour le barreau réalisé.

La cavité 5 du conteneur est de préférence de section circulaire, ce qui permet d'obtenir un barreau également de section circulaire; il est évident cependant que l'invention n'est pas limitée à une telle forme et que d'autres sections pourront être utilisées selon les applications envisagées.

Le matériau 6 utilisé dans le procédé de l'invention est, selon une caractéristique fondamentale, un matériau pulvérulent; ce matériau est distribué de manière continue à la partie supérieurs du conteneur et dans l'axe du trou cylindrique 5. On utilise pour cela un distributeur 6A de matériau pulvérulent, bien connu de l'homme de métier, et qui est couplé à un système de régulation de débit non représenté.

Le matériau pulvérulent est par exemple un mélange de plusieurs composants halogénés; dans le cas d'un verre fluoré, le matériau est un mélange de composants choisis par exemple parmi le fluorure de zirconium (ZrF4), le fluorure de baryum (BaF2), le fluorure de lanthane (LaF3), le fluorure d'aluminium (AlF3) et le fluorure de sodium (NaF). Lorsque tous ces composants sont utilisés, on dit qu'on a affaire à un verre de type ZBLAN. Les proportions de ces divers composés sont choisies par l'homme du métier selon le type d'application retenue.

Le conteneur 4 est chauffé pour permettre la fusion du matériau pulvérulent; avantageusement, l'ensemble du conteneur en graphite est chauffé au moyen d'un bobinage 4A alimenté en radio fréquence (RF). La chaleur parvient au matériau à traiter par conduction. Le conteneur et les appareils annexes sont disposés dans une enceinte étanche à l'atmosphère, par exemple une boîte à gants, dans laquelle règne une atmosphère de gaz neutre tel que l'argon ou l'hélium.

Selon une autre caractéristique importante du procédé de l'invention, une surpression de gaz est réalisée entre le barreau en formation et la paroi de la cavité cylindrique du conteneur, de manière à créer une couche permanente de gaz 7 entre le barreau et le conteneur. La couche de gaz a une épaisseur de l'ordre de quelques dizaines de microns. Elle assure un confinement du barreau et évite tout contact polluant avec la paroi du conteneur. Le gaz, préchauffé ou non, est amené par une canalisation 8 et débouche dans une cavité annulaire 9 pratiquée au sein du conteneur. Cette cavité est séparée de la cavité 5 par une zone poreuse 10 (par exemple en graphite de porosité beaucoup plus importante que celle du reste du conteneur); le gaz diffuse à travers la zone 10 pour créer la couche 7. Des capteurs de pressions non représentés fournissent les données nécessaires à un organe non représenté de réglage de la pression d'amenée du gaz pour obtenir en permanence la surpression recherchée. Le gaz injecté par la canalisation 8 est de préférence de même nature que celui qui règne dans l'enceinte étanche précitée.

L'emploi de la technique précitée, qui s'apparente au procédé de sustentation, de positionnement et de moulage sans contact de masses liquides tel que décrit dans le brevet français N° 81 13966 au nom du Commissariat à l'Energie Atomique, permet d'obtenir une précision importante dans le diamètre du barreau, par exemple de la dizaine de microns pour un barreau de 15 ou de 25 millimètres de diamètre.

Selon une autre caractéristique importante du procédé de l'invention, on crée, à la partie supérieure du barreau en formation, une zone 12 où la température est si élevée que le matériau a une viscosité très faible, par exemple comparable à celle de l'eau et en tous cas de l'ordre de la poise. Cette disposition permet d'affiner le verre, c'est-à-dire d'éliminer toutes les microbulles qui auraient tendance à se former. Cette zone de chauffage intense est limitée, de manière à permettre l'affinage sans risquer une décomposition trop importantes de certains des composés fluorés utilisés, tel que le fluorure de zirconium. A titre d'exemple, pour un verre de type ZBLAN, dont le point de fusion est inférieur à 600°C, on porte la température de la zone 12 à une valeur voisine de 750°C.
Le chauffage intense de la zone 12 est avantageusement obtenu au moyen d'un laser à CO2 ou de tout autre moyen fournissant un rayonnement directif 15 de grande puissance.

On notera qu'il est important que le profil de la température t (figure 2) tout le long de la zone verticale comprise entre le sommet A et la base C du conteneur, en passant par la cote B de la zone 12, soit rigoureusement contrôlée. Il faut assurer en permanence le pic de température dans la zone 12 et assurer une décroissance de la température entre les cotes B et C de manière à réaliser un compromis entre deux objectifs contradictoires:
- d'une part, il faut obtenir une vitesse de décroissance de la température suffisamment importante pour obtenir un taux de formation de cristallites négligeable,
- d'autre part,il faut que la vitesse de décroissance de la température ne soit pas trop forte, pour éviter tout risque de rupture du barreau.

On notera qu'il peut être avantageux, pour éviter toute contamination de la partie inférieure du barreau 2 par contact avec le plateau 1, d'interposer, entre ce dernier et le barreau, une plaque 1A de verre fluoré de même composition que celui du barreau en cours d'élaboration.

Il peut également être avantageux de prévoir, au voisinage de la zone 12, un jet de gaz fluoré instable 16 (par exemple fluorure d'azote NF3, l'hexafluorure de soufre SF6 ou un mélange de ces deux gaz) qui, en se décomposant, apporte du fluor pour accroître le caractère oxydant de l'atmosphère environnante et éviter ainsi la formation d'impuretés provenant d'espèces réduites.

En conclusion, le procédé de l'invention permet d'élaborer des barreaux cylindriques vitreux de section parfaitement définie, à partir de poudres. Le procédé est un procédé continu, qui permet donc d'obtenir avec rapidité un grand nombre de préformes, qui ont le grand avantage d'être déjà affinées, ce qui constitue un atout important lors des traitements ultérieurs par lévitation sur film de gaz. On sait en effet que l'apparition de bulles en surface, au cours de la lévitation, est responsable du mouillage avec la paroi du diffuseur; dès l'apparition de mouillage, celui-ci s'étend à toute la paroi et la lévitation cesse. Cet inconvénient est évité par l'emploi de barreaux réalisés conformément au procédé qui a été décrit.

## Revendications

1. Procédé pour la réalisation d'un barreau de verre halogéné et en particulier fluoré, caractérisé en ce qu'il comprend les opérations suivantes:
- on distribue en continu une poudre (6) constituée d'un mélange de produits halogénés sur un support (1) déplaçable de manière continue verticalement de haut en bas, ledit support étant placé, au commencement de la mise en marche du procédé, à l'intérieur d'un conteneur (4) ayant une cavité (5) intérieure cylindrique de section supérieure de quelques dizaines de microns à celle du barreau à réaliser, ledit conteneur comprenant des moyens de chauffage (4A) pour assurer la fusion du matériau pulvérulent,
- on injecte en permanence, entre le barreau en formation et la paroi de ladite cavité cylindrique (5) , un gaz, de manière à réaliser une couche (7) de gaz de quelques dizaines de microns d'épaisseur à une pression supérieure à celle qui environne le conteneur et ajustée en permanence de manière à éviter tout contact entre le matériau du barreau et ladite paroi intérieure du conteneur,
- on chauffe la partie supérieure du barreau en formation de manière à créer une zone (12) dans laquelle la viscosité du matériau est de l'ordre de la poise, favorisant l'élimination des microbulles.

2. Procédé selon la revendication 1, caractérisé en ce que le chauffage de ladite zone (12) est effectué par rayonnement, au moyen d'un laser.

3. Procédé selon l'une des revendication 1 et 2, caractérisé en ce que le conteneur (4) est en graphite, le moyen de chauffage (4A) comprenant un bobinage (4A) alimenté en radiofréquence.

4. Procédé selon l'une des revendications 1 à 3, caractérisé en ce que le gaz est amené par une canalisation à l'intérieur d'une cavité annulaire (9) séparée de la cavité cylindrique (5) par une portion (10) poreuse.

5. Procédé selon la revendication 4, caractérisé en ce que ladite portion poreuse (10) est réalisée en graphite poreux.

6. Procédé selon l'une des revendications 1 à 5, caractérisé en ce que le gaz est choisi parmi l'argon et l'hélium.

7. Procédé selon l'une des revendications 1 à 6, caractérisé en ce qu'on dirige, au voisinage de ladite zone (12), un jet (16) de gaz fluoré instable.

8. Procédé selon la revendication 7, caractérisé en ce que ledit gaz fluoré est choisi parmi le fluorure d'azote, l'hexafluorure de soufre ou un mélange de ces deux gaz.

## Patentansprüche

1. Verfahren zur Herstellung eines Stabs aus halogeniertem, insbesondere fluorierten Glas, dadurch gekennzeichnet, daß es die folgenden Verfahrensschritte aufweist:
- man verteilt kontinuierlich ein Pulver (6) bestehend aus einer Mischung von halogenierten Produkten auf einem fortlaufend senkrecht von oben nach unten verschiebbaren Träger (1), wobei der Träger zu Beginn des Verfahrens im Inneren eines Containers (4) angeordnet wird, der einen inneren zylindrischen Hohlraum (5) aufweist, dessen Querschnitt um einige zehn Mikrometer größer ist als der des herzustellenden Stabs, wobei der Container Heizmittel (4A) aufweist, um das Schmelzen des pulverförmigen Materials zu bewirken,
- man speist permanent zwischen den sich bildenden Stab und die Wand des zylindrischen Hohlraums (5) ein Gas ein, um eine Gasschicht (7) von einigen zehn Mikrometer Dicke herzustellen, dessen Druck größer als der Druck in der Umgebung des Containers ist, und der ständig nachgeregelt wird, um jeden Kontakt zwischen dem Material des Stabs und der Innenwand des Containers zu vermeiden,
- man heizt den oberen Bereich des sich bildenden Stabs, um eine Zone (12) zu bilden, in der die Viskosität des Materials etwa 1 Poise beträgt, was die Entfernung der Mikrobläschen begünstigt.

2. Verfahren nach Anspruch 1, dadurch gekennzeichnet, daß das Erhitzen dieser Zone (12) durch Bestrahlung mittels eines Lasers geschieht.

3. Verfahren nach einem der Ansprüche 1 und 2, dadurch gekennzeichnet, daß der Container (4) aus Graphit ist, während das Heizmittel (4A) eine mit Hochfrequenz gespeiste Wicklung (4A) aufweist.

4. Verfahren nach einem der Ansprüche 1 bis 3, dadurch gekennzeichnet, daß das Gas durch einen Kanal in das Innere eines ringförmigen Hohlraums (9) zugeführt wird, der von dem zylindrischen Hohlraum (5) durch einen porösen Bereich (10) getrennt ist.

5. Verfahren nach Anspruch 4, dadurch gekennzeichnet, daß der poröse Bereich (10) aus porösem Graphit besteht.

6. Verfahren nach einem der Ansprüche 1 bis 5, dadurch gekennzeichnet, daß das Gas Argon oder Helium ist.

7. Verfahren nach einem der Ansprüche 1 bis 6, dadurch gekennzeichnet, daß man in die Nähe der Zone (12) einen Strom von unstabilisiertem fluorierten Gas (16) lenkt.

8. Verfahren nach Anspruch 7, dadurch gekennzeichnet, daß dieses fluorierte Gas aus dem Stickstofffluorid, dem Schwefelhexafluorid oder einer Mischung dieser beiden Gase ausgewählt wird.

## Claims

1. Method for fabricating a halogenated and in particular fluorinated glass bar characterised in that it comprises the following operations:
- a powder (6) consisting of a mixture of halogenated products is dispensed continuously onto a support (1) adapted to be moved continuously vertically downwards, said support being placed at the beginning of the method inside a container (4) having a cylindrical interior cavity (5) whose cross-section is a few tens of microns larger than that of the bar to be fabricated, said container comprising heating means (4A) for melting the powder material,
- a gas is injected at all times between the bar being formed and the wall of said cylindrical cavity (5) to produce a layer (7) of gas a few tens of microns thick at a continuously controlled pressure greater than that surrounding the container to avoid any contact between the material of the bar and said inside wall of the container,
- the upper part of the rod being formed is heated to create an area (12) in which the viscosity of the material is in the order of 1 poise, favouring the elimination of microbubbles.

2. Method according to claim 1 characterised in that said area (12) is heated by laser radiation.

3. Method according to claim 1 or claim 2 characterised in that the container (4) is made from graphite and the heating means (4A) comprise a radio frequency coil (4A).

4. Method according to any one of claims 1 to 3 characterised in that the gas is fed through a pipe into the interior of an annular cavity (9) separated from the cylindrical cavity (5) by a porous portion (10).

5. Method according to claim 4 characterised in that said porous portion (10) is made from porous graphite.

6. Method according to any one of claims 1 to 5 characterised in that the gas is selected from argon and helium.

7. Method according to any one of claims 1 to 6 characterised in that a jet (16) of unstable fluorinated gas is directed into the vicinity of said area (12).

8. Method according to claim 7 characterised in that said fluorinated gas is selected from nitrogen fluoride, sulphur hexafluoride or a mixture of these two gases.
